# EUROPÄISCHE PATENTANMELDUNG

(11) **EP 1 323 345 A2**
(43) Veröffentlichungstag der Anmeldung: **02.07.2003**
(21) Anmeldenummer: 02027799.2
(22) Anmeldetag: 12.12.2002
(51) Int. Cl.: A01N 25/34

(54) **Dosiersystem für das Pflanzenwachstum beeinflussende Substanzen**

(30) Priorität: 14.12.2001 DE 10161441
(71) Anmelder: Triton Umweltschutz GmbH, 06749 Bitterfeld (DE)
(72) Erfinder: Stützer, Meinolf, D-06800 Jessnitz (DE); Watzke, Roland, D-06766 Wolfen (DE); Watzke, Martina, D-06766 Wolfen (DE); Johne, Siegfried, D-06749 Bitterfeld (DE); Sell, Ursula, D-04509 Neukyhna-Pohritzsch (DE); Winkler, Horst, D-06791 Zschornewitz (DE)
(74) Vertreter: Tragsdorf, Bodo, Dipl.-Ing.

(57) **Zusammenfassung**

Die Erfindung betrifft ein Dosiersystem für Substanzen, mit denen das Wachstum von Pflanzen beeinflusst werden kann, wie Blüh- und Wachstumsstimulatoren verschiedenster Arten, Pflanzennährstoffe und Materialien zur Stabilisierung und Resistenzerhöhung gegen Schadstoffeinflüsse für alle Art von Pflanzen.
Ausgehend von den Nachteilen des bekannten Standes der Technik soll ein verbessertes Dosiersystem geschaffen werden, mit dem es möglich ist, die Substanzen gezielt nach dem Bedarf und Entwicklungsstadium der jeweiligen Pflanze zu dosieren.

Das vorgeschlagene Dosiersystem besteht aus mindestens einem aus zwei zusammensteckbaren Teilstücken gebildeten kapselartigen Körper mit einem geschlossenen Hohlraum, der mit einer definierten Menge das Wachstum beeinflussender Substanzen gefüllt ist. Der kapselartige Körper besteht aus einem im Erdreich mit zeitlicher Verzögerung selbsttätig zerstör- oder zersetzbarem Material. Als zerstörbares Material wird z.B. ein polymeres Material eingesetzt, das so eingestellt ist, dass dieses nach einer definierten Verzögerungszeit durch Rissbildung aufplatzt und dadurch die in dem kapselartigen Körper befindlichen Substanzen freigegeben werden. Eine andere Alternative besteht darin, den kapselartigen Körper aus einem wasserlöslichen Material herzustellen, das sich nach einer bestimmten Zeitdauer im Erdreich unter Einfluss von Feuchtigkeit zersetzt.

## Beschreibung

Die Erfindung betrifft ein Dosiersystem für Substanzen, mit denen das Wachstum von Pflanzen beeinflusst werden kann, wie Blüh- und Wachstumsstimulatoren verschiedenster Arten, Pflanzennährstoffe und Materialien zur Stabilisierung und Resistenzerhöhung gegen Schadstoffeinflüsse für alle Art von Pflanzen.

Es ist bekannt, Pflanzen mit den verschiedensten Stoffen zu behandeln, um eine bestimmte Wirkung zu erreichen. Am bekanntesten ist dabei der weite Bereich der Verabreichung von Düngemitteln mit dem Ziel, eine Ertragssteigerung bzw. Qualitätsverbesserung der Früchte (auch Blüten) zu erreichen bzw. die zur Pflanzenentwicklung erforderlichen Nährstoffe der Pflanze auch in geeigneter Form anzubieten bzw. zur Verfügung zu stellen. Die Zugabe der Düngemittel erfolgt in fester oder flüssiger Form auf oder in den Boden, wobei die Zusammensetzung und der Zeitpunkt der Ausbringung dem Pflanzenwachstum angepasst sind. Als Flüssigkeiten werden im allgemeinen reine Lösungen, Emulsionen und Suspensionen eingesetzt. Ebenso bekannt und üblich ist die Darreichungsform der Nährstoffe in fester Form, als Pulver, meist für geringe Mengeneinsätze, als Granulat oder Pellets, wobei jede Art der Darreichungsform Vor- und Nachteile besitzt und dem Anwendungsfall entsprechend auszuwählen ist. So kann z.B. ein flüssiger Dünger eine kurzzeitige Wirkung ermöglichen, granulierte Materialien oder Pellets lassen eine Langzeitwirkung erwarten. Auch die Zugabe von Pflanzenschutzstoffen und Mitteln zur Erhöhung der Resistenz der Pflanze gegen äußere Einflüsse, Fehlentwicklungen und Fehlernähungen erfolgt direkt an bzw. in dem Bereich der zu behandelnden Pflanzen.
Auch Düngerstäbchen in verschiedensten Packungsgrößen und speziellen Pflanzen angepassten Zusammensetzungen sind üblich und gebräuchlich. Diese finden allerdings vorwiegend im häuslichen und kleingärtnerischen Bereich Anwendung. Aus der DE-OS 37 42 328 ist eine pflanzenwachstumsregulierende Vorrichtung für die Verwendung von in Behältern eingetopften oder einzelnen Pflanzen, Büschen oder Bäumen bekannt, die eine geformte Masse aus einem nicht-faserigen Material aufweist, die mit einer pflanzenwachstumsregulierenden Zusammensetzung imprägniert ist. Geeignete Formen für diese Masse sind Matten, Ringe, Scheiben, Dorne, Quader, Stangen, Kapseln, Tabletten oder Pillen. In diesem Zusammenhang ist unter Kapsel ein fester Formkörper zu verstehen, der in seiner äußeren Form einer Kapsel nachgebildet ist. Die Formmasse zur Bildung der Kapsel ist entweder mit den erforderlichen Wirkstoffen versetzt oder die geformte Masse wird nachträglich mit den Wirkstoffen imprägniert, durch Besprühen oder Einweichen.
Von Nachteil ist, dass die entsprechenden Formen nach dem Einbringen in das Erdreich bereits mit der Abgabe der imprägnierten Wachstumsregulatoren beginnen, was nicht in jedem Fall erwünscht ist. Die Imprägnierung ermöglicht nur eine relativ kurze Wirkungsdauer. Außerdem sind viele Wirkstoffe nicht für eine Imprägnierung geeignet. Eine Imprägnierung verursacht außerdem zusätzliche Kosten.

Der Erfindung liegt die Aufgabe zugrunde, ein verbessertes Dosiersystem für die das Pflanzenwachstum beeinflussende Substanzen zu schaffen, mit dem es möglich ist, die Substanzen gezielt nach dem Bedarf und Entwicklungsstadium der jeweiligen Pflanze zu dosieren.

Erfindungsgemäß wird die Aufgabe durch die im Anspruch 1 angegebenen Merkmale gelöst. Geeignete Weiterbildungen sind Gegenstand der Ansprüche 2 bis 18.
Das vorgeschlagene Dosiersystem besteht aus mindestens einem aus zwei zusammensteckbaren Teilstücken gebildeten kapselartigen Körper mit einem geschlossenen Hohlraum, der mit einer definierten Menge das Wachstum beeinflussender Substanzen gefüllt ist. Der kapselartige Körper besteht aus einem im Erdreich mit zeitlicher Verzögerung selbsttätig zerstör- oder zersetzbarem Material. Als zerstörbares Material wird z.B. ein polymeres Material eingesetzt, das so eingestellt ist, dass dieses nach einer definierten Verzögerungszeit durch Rissbildung aufplatzt und dadurch die in dem kapselartigen Körper befindlichen Substanzen freigegeben werden. Eine andere Alternative besteht darin, den kapselartigen Körper aus einem wasserlöslichen Material herzustellen, das sich nach einer bestimmten Zeitdauer im Erdreich unter Einfluss von Feuchtigkeit zersetzt. Geeignete wasserlösliche Materialien sind z.B. Proteine/Peptide, Polysaccharide, Acrylatderivate, Polyvinylalkohole oder Cellulosederivate. Ein besonders gut geeignetes Material für den kapselartigen Körper ist unterschiedlich harte lösliche Gelatine, um den Zeitpunkt der Freigabe der Wirksubstanzen zu beeinflussen. Bei der eingesetzten Hartgelatine handelt es sich um ein durch chemische und thermische Behandlung gewonnenes Partialhydrolysat des Bindegewebsproteins Kollagen, vorzugsweise mit einem Bloombereich von 80 bis 300, insbesondere von 200 bis 250 Bloom, und einem pH-Wert zwischen 5 und 7, vorzugsweise 5,4 bis 6. Überraschenderweise wurde festgestellt, dass beim Einsatz von Mykorrhiza als Wirksubstanz, gegebenenfalls in Verbindung mit weiteren Substanzen, die Gelatine des kapselartigen Körpers in Verbindung mit der Mykorrhiza sich besonders vorteilhaft auf das Pflanzenwachstum auswirkt.
Als das Wachstum beeinflussende Substanzen kommen Blüh- und Wachstumsstimulatoren sowie Pflanzennährstoffe in Frage. Blüh- und Wachstumsstimulatoren bzw. Pflanzenhormone sind Verbindungen, die als körpereigene Regulatoren von Pflanzen für deren Lebensvorgänge von essentieller Bedeutung sind. Die Hormone bewirken die Regulation und Koordination des Stoffwechselgeschehens und sind damit auch für morphologische Veränderungen verantwortlich. Sie induzieren die Synthese bestimmter Enzyme und beeinflussen die Membranpermeabilität. Hormone wirken dabei als chemische Signalstoffe und nehmen als solche an den Reaktionen, die sie anregen, selbst nicht teil.
Hormone stellen ihrer chemischen Natur nach eine heterogen zusammengesetzte Stoffklasse dar. Bezüglich Biosynthese, Speicherung, Ausschüttung, Transport, Wirkungsmechanismus und Abbau zeigen die Hormone charakteristische Unterschiede, aber auch grundsätzliche Gemeinsamkeiten. Allen Hormonen ist gemeinsam, dass sie in äußerst niedriger Konzentration wirken und dass im allgemeinen ihr Bildungsort vom Wirkort entfernt ist, so dass sie einem Transport unterliegen. Außerdem sind Hormone meistens funktionsspezifisch und nicht artspezifisch.
Durch den externen Einsatz von Pflanzenhormonen läßt sich das Pflanzenwachstum gezielt beeinflussen (z.B. Blühinduktion, schnellere Fruchtreife, höhere Erträge).
Als Blüh- und Wachstumsstimulatoren sind besonders geeignet: Infektionseinheiten verschiedener Mykorrhizaarten, z.B. endotropher, ektotropher, erikoder Mykorrhiza; Phytohormone (z.B. 3-lndolylessigsäure zur Bewurzelung); Bakterien; Pilze (z.B. Trichoderma); Rhizobien; Algenpräparate; Pflanzenextrakte
(z.B. Yucca-E.); Kohlenhydrate und Vitamine.
Als Pflanzennährstoffe bezeichnet man alle chemischen Elemente, die für das Wachstum und die normale Entwicklung der Pflanze notwendig sind und die in ihrer physiologischen Funktion nicht von einem anderen Element vollständig ersetzt werden können. Hauptnährelemente sind: Kohlenstoff, Wasserstoff, Sauerstoff, Stickstoff, Phosphor, Schwefel, Kalium, Kalzium, Magnesium und Eisen. Weitere, aber in geringerer Menge erforderliche Pflanzennährstoffe sind die Mikronährelemente oder Spurenelemente: Mangan, Kupfer, Zink, Molybdän, Bor, Natrium sowie mit gewissen Einschränkungen Chlor und Silizium.
Eisen und Mangan stehen an der Grenze zwischen Makro- und Mikronährelementen. Für die Ertragsbildung bei Pflanzen ist weniger die absolute Menge der zugeführten Nährstoffe maßgebend als vielmehr das Verhältnis, in dem die Nährstoffe zueinander stehen. Bevorzugte Nährstoffe sind z. B. Stickstoff, Kalium und Phosphor als Kernnährstoffe in Form von anorganischen Salzen oder in organischer Bindung als schnellwirkende Substanzen (z.B. Startdüngung) oder mit Depotwirkung und Mikronährstoffe (Kobalt-, Molybdän u.a.).

Erforderlichenfalls können in die kapselartigen Körper außer den vorgenannten Substanzen noch Füll- und/oder Hilfsstoffe gegeben werden, wie polymere Gelsysteme (z.B. als Wasserspeicher), Verbindungen mit antimikrobiellen Eigenschaften (z.B. als Saatgutbeize), organische (z.B. Cellulose, Torf) sowie anorganische Stoffe (z.B. Kieselgur, -gele) oder auch antibiotisch wirkende Substanzen zur Vermeidung des Befalls der Pflanze mit schädlichen Organismen.

Die kapselartigen Körper können somit ganz gezielt mit den für das Pflanzenwachstum erforderlichen Substanzen und Stimulatoren gefüllt und zu gegebenem Zeitpunkt in den Wurzelbereich der Pflanze gebracht werden. Die verschiedenen Kombinationen ermöglichen eine optimale, auf die jeweilige Pflanze abgestimmte Dosierung. Die Füllung der Kapsel ist hinsichtlich der eingesetzten Materialien als auch der Mengen sehr vielfältig variierbar. So kann eine Kapsel z.B. ein oder mehrere Saatkörper enthalten, welchen gleich die zur Gewährleistung des Wachstumsprozesses erforderlichen Nährstoffe beigegeben sind. Die gleichzeitige Einbringung von einem oder mehreren Saatgutkörnern in die Kapsel eröffnet einen vollkommen neuen Weg zur Ausbringung von Saatgut. Für den Keimprozess des Saatgutes können in der Kapsel optimale Bedingungen geschaffen werden. Außerdem können durch diese Art und Weise der Ausbringung von Saatgut auch bedeutende Einsparungen an Saatgut erzielt werden, da in den Fällen, wo bisher in der Praxis mehrere Saatkörner zur Bildung einer Pflanze zur Aussaat gebracht werden mussten, nunmehr ein bzw. wenige Saatkörner ausreichend sind. Neben den zur Schaffung optimaler Keimbedingungen notwendigen Substanzen können in die Kapsel gleichzeitig auch noch in retardierter Form Stimulatoren für den Blüh- und Wachstumsprozess gegeben werden. Die in die Kapseln zu füllenden Inhaltsstoffe können dem Bedarf der Pflanze und dem Entwicklungsziel angepasst werden.

Außer der Variationsmöglichkeit hinsichtlich der Inhaltsstoffe für die kapselartigen Formkörper bestehen auch noch verschiedene Alternativen bezüglich der Ausbildung der kapselartigen Formkörper.

Diese können aus mehreren Schichten unterschiedlicher Materialien bestehen, wobei die äußere Schicht aus einem quellbaren Material gebildet ist. Das quellbare Material kann zusätzlich mit einem oder mehreren der Wirkstoffe, Zucker, Kohlenhydrate, Bakterien, Pilze oder Nährstoffen versetzt sein, so dass die Kapsel zusätzlich noch eine das Wachstum der Pflanze fördernde Funktion ausübt.

Von den in die Kapsel gefüllten Substanzen können auch eine oder mehrere in retardierter Form vorliegen. So können z.B. bestimmte Nährstoffe mit einer Umhüllung versehen werden, um erst zu einem späteren Zeitpunkt als die anderen in der Kapsel befindlichen Substanzen freigesetzt zu werden.
Die Verzögerungszeit zur Freisetzung der das Wachstum beeinflussenden Substanzen ist außerdem vorrangig über die Wanddicke der Kapsel einstellbar. Selbstverständlich kann auch durch unterschiedliche Kapsel-Materialien Einfluss auf die Verzögerungszeit zur Freisetzung der das Wachstum beeinflussenden Substanzen genommen werden.
Eine andere Alternative bildet ein Dosiersystem auf der Basis "Kapsel in Kapsel", wobei in der eigentlichen Kapsel neben bestimmten das Wachstum fördernden Substanzen zusätzlich noch eine kleinere Kapsel mit bestimmten Inhaltsstoffen gefüllt, gegeben ist, die eine Freigabe der Wirkstoffe erst zu einem späteren Zeitpunkt ermöglicht. Damit ist es möglich, eine Pflanze über einen relativ langen Zeitraum mit den erforderlichen Nähr- und Wachstumsstoffen zu versorgen. Die Verzögerungszeiten für die Zersetzung der Kapseln bei der Variante "Kapsel in Kapsel" können z. B über die Wanddicke der Kapseln unterschiedlich eingestellt werden. Die erste Kapsel, die die zweite Kapsel aufnimmt, besitzt selbstverständlich eine kürzere Zersetzungszeit als die zweite Kapsel.
Das Dosiersystem auf der Basis von mit das Wachstum beeinflussenden Substanzen gefüllten Kapseln ermöglicht noch eine bisher nicht mögliche Verabreichung von miteinander unverträglichen Substanzen. Das Dosiersystem besteht in diesem Fall aus einem Paar kapselartiger Körper, wobei einer der kapselartigen Körper mit einer Substanz gefüllt ist, die mit der in dem anderen kapselartigen Körper befindlichen Substanz unverträglich ist. Die ein Paar bildenden zwei Kapseln können zur besseren Unterscheidung unterschiedlich eingefärbt werden.
Ein Beispiel eines für eine Pflanze unverträglichen Systems sind Samenkorn und Düngerkonzentrate, die nicht miteinander kombiniert, also zusammengebracht werden dürfen. Samen besitzen in der Regel für die ersten Tage und Wochen nach der Keimung Nährstoffreserven, die auf den Keimling abgestimmt sind. Viele Sämlinge reagieren deshalb sehr empfindlich auf zu hohe Düngerkonzentrationen in der ersten Entwicklungsphase.
Die Dosierung der für das Pflanzenwachstum erforderlichen Substanzen kann in einer Kapsel oder auch in mehreren Kapseln erfolgen, wobei die einzelnen Kapseln mit verschiedenen Substanzen gefüllt sind. Bei einer Dosierung in mehreren Kapseln, die ein Dosiersystem für eine bestimmte Pflanzen bilden, können diese entweder gleichzeitig oder zu unterschiedlichen Zeitpunkten der jeweiligen Pflanze verabreicht werden.
Die Verwendung von Kapseln führt vor allem beim Einsatz von Mykorrhiza als wachstumsförderndes Material zu weiteren Vorteilen. Bisher ist es nur möglich, durch Anzucht von mykorrhizahaltigen Pflanzen Adsorbentien zu erhalten, die mit infektiösem Mykorrhizainokolum infiziert sind. Diese mykorrhizahaltigen Adsorbentien eigenen sich zur Ausbringung mit handelsüblichen Geräten bzw. Maschinen der Land-, Garten- und Forstwirtschaft. Die Abfüllung der Mykorrhiza in Kapseln bietet eine wesentlich kostengünstigere Möglichkeit zur großtechnischen Ausbringung der Mykorrhiza in der Landwirtschaft. Die Kapseln ermöglichen ein gezieltes Ausbringen in den unmittelbaren Pflanzbereich. Dadurch können die erforderlichen Einsatzmengen im Vergleich zu dem bisher praktizierten ungezielten Ausbringen mittels Streugeräten oder Sämaschinen wesentlich verringert werden. Außerdem schützen die Kapseln die Mykorrhiza vor äußeren Einflüssen. Während der Lagerung der Mykorrhiza in der Kapsel ist diese gegenüber möglichen Infektionen und pathogenen Keimen geschützt. Die Kapseln können nach ihrer Füllung als Blister verpackt und über einen längeren Zeitraum zwischengelagert werden, ohne nachteilige Auswirkungen auf die Inhaltsstoffe. Die Kapseln ermöglichen ein sauberes Arbeiten beim Anwender und verursachen keine Staubentwicklung. Die Wirksubstanzen können in einer sehr genauen Dosierung in die Kapsel gefüllt werden, wobei auch problemlos Mikrodosierungen möglich sind.
Die erfindungsgemäße Applikationsform "Kapsel" kann sowohl großflächig in dem Bereich der Landwirtschaft und des Gartenbaus als auch im kleingärtnerischen Bereich sowie im individuellen Bereich für Zimmerpflanzen, der Forstwirtschaft und bei der Rekultivierung von Bergbaufolgelandschaften (Deponien, Befestigung von Halden, Dünen, etc.) für alle Arten von Pflanzen eingesetzt werden, insbesondere auch für den Gemüse-, Obst- und Zierpflanzenanbau. Aufgrund der Kombinationsfähigkeit der in die Kapseln einbringbaren Wirksubstanzen ist ein sehr breiter Anforderungsbereich bedienbar.
Im Vergleich zu anderen bekannten Applikationsformen, wie z.B. Tabletten oder Pellets, werden die Wirksubstanzen keiner nachteiligen thermischen Behandlung ausgesetzt. Die Kapseln können großtechnisch als Massenartikel hergestellt und mit den jeweiligen Wirksubstanzen entweder einzeln oder in Kombination, auch zusammen mit Saatgut, gefüllt werden. Je nach den Erfordernissen können die gefüllten Kapseln entweder verpackt oder lose zum Anwender transportiert werden. Mittels handelsüblicher Aussaat- oder Pflanzmaschinen können die Kapsel gezielt in den Boden bzw. den Wurzelbereich der Pflanzen eingebracht werden.

### Kapseln

Aus Hartgelatine mit 200 bis 250 Bloom und einem pH von 5 bis 7 werden ovale Kapseln mit einer Gesamtlänge zwischen 14 und 25 mm, einem Außendurchmesser von 5 bis 8 mm, einer Wanddicke von 0,1 bis 0,5 mm und einer Füllkapazität (Hohlraum) von 0,20 bis 0,80 ml hergestellt.
Die einzelnen Kapseln bestehen aus zwei Teilstücken (Hälften), einem Ober- und Unterteil. Das Kapseloberteil mit dem größeren Innendurchmesser wird über das Kapselunterteil geschoben. Die Kapseln können auch aus einem anderen der bereits genannten Materialien, vorzugsweise aus Polyvinylalkohol oder Methylcellulose, hergestellt werden.

### Füllung der Kapseln mit Mykorrhizainokulum

Das Mykorrhizainokulum wird in an sich bekannter Weise auf geblähtem Perlitgestein angezogen und auf eine Korngröße von < 2,5 mm zerkleinert. In die hergestellten Hartgelatinekapseln werden z.B. jeweils 200 mg des zerkleinerten Perlits als Wirksubstanz gefüllt. Außerdem können in diese Kapseln zusätzlich noch bestimmte Mengen an Nährstoffen gefüllt werden, die sich positiv auf das Wachstum der jeweiligen Pflanze auswirken. In die mit Mykorrhiza gefüllten Kapseln können gleichzeitig auch ein oder mehrere Saatkörner einer Pflanze gegeben werden, so dass die Anzucht der Pflanzen gleich mit dem Wachstumsstimulator zusammen erfolgen kann. So wird z.B. in eine Kapsel das Saatgut einer Pflanze (Gurke) gemeinsam mit dem Blüh- und Wachstumsstimulator (z.B. Mykorrhiza) und die erforderlichen Pflanzennährstoffe gefüllt. Das hat für die Handhabung erhebliche Vorteile.
Zur Füllung von Einzelkapseln bzw. Einkörperkapseln werden bevorzugt Kombinationen auf der Basis mykorrhizahaltiger Trägermaterialien, Dünger, Spurenelemente, Phytohormone und Pflanzenschutzmitteln eingesetzt. Für das bereits erwähnte Dosiersystem "Kapsel in Kapsel" werden z.B. in Mikrokapseln eingebettete Mykorrhizasporen und weitere Nährstoffe und/oder Pflanzenschutzmittel in die Kapsel gefüllt, wobei die in den Mikrokapseln eingeschlossenen Mykorrhizasporen erst mit zeitverzögernder Wirkung freigesetzt werden. In die großen Kapseln können z.B. Samenkorn und Mykorrhiza gegeben werden sowie je eine kleine Kapsel, die mit Pflanzenschutzmitteln gefüllt ist, die dann erst nach dem Aufgehen des Samenkorns freigesetzt werden. Das Dosiersystem "Kapsel in Kapsel" ohne Samenkorn wird direkt an die Pflanze appliziert.
Der Einsatz eines Kapselpaares zur Dosierung von miteinander unverträglichen Substanzen ist z.B. für folgenden Anwendungsfall von Vorteil.
Mykorrhizainokula auf verschiedenen Trägern können nicht mit stark phosphorhaltigen Düngern zusammen appliziert werden. Diese beiden Wirksubstanzen werden daher in getrennte Kapseln gefüllt und auch örtlich getrennt appliziert, so dass die miteinander unverträglichen Substanzen nicht in Berührung gelangen. Die Applikation kann dann entweder gleichzeitig oder in einem zeitlichen Abstand erfolgen. Dies trifft auch für Saatgut und Düngerkonzentrate zu, die miteinander unverträglich sind und nicht gemeinsam appliziert werden können.

Bevorzugte Kombinationen zur Ausbringung von Saatgut und wachstumsfördernden Wirksubstanzen in Kapseln sind z.B.: Saatgut mit Mykorrhizaträger, Saatgut mit wasserspeichernden Polymeren, Saatgut mit Auflauffungiziden, mykorrhizahaltige Trägermaterialien mit Spurenelementen.

### Beispiele

In den nachfolgenden Beispielen werden folgende ovale zweiteilige Kapseln A bis E eingesetzt:

| Kapsel-Typ | A | B | C | D | E |
|---|---|---|---|---|---|
| Material | Hartgelatine | | | PVA | MEC |
| Länge (mm) | 22 | 18 | 14 | 25 | 25 |
| Außendurchmesser (mm) | 7,65 | 6,35 | 5,33 | 7,5 | 7,8 |
| Wanddicke (mm) | 0,21 | 0,19 | 0,17 | 0,4 | 0,5 |
| Füllkapazität (ml) | 0,68 | 0,37 | 0,21 | 0,7 | 0,8 |
| PVA Polyvinylalkohol; MEC Methylcellulose | | | | | |

### Beispiel 1

10 Tomatenpflanzen der Sorte "Balkonzauber" wurden in einer Sämlingsgröße von 5 cm in Töpfen pikiert und mit Kapseln vom Typ A, die mit 200 mg zerkleinertem mykorrhizahaltigem Perlit gefüllt sind, inokuliert. In den Pflanztopf jeder Pflanze wurde unmittelbar nach der Pikierung eine Kapsel A dosiert.
Die Pflanzen wurden 4 Wochen in Töpfen unter Gewächshausbedingungen kultiviert (14 h, Beleuchtung, Luftfeuchtigkeit 65 bis 70 %, Temperatur 23 ±2 °C).

Nach 6 Wochen wurden die Pflanzen ins Freiland ausgepflanzt.

### Vergleichbeispiel 1

10 Tomatenpflanzen der Sorte "Balkonzauber" wurden in einer Sämlingsgröße von 5 cm in Töpfen pikiert. Den Tomatenpflanzen wurden an Stelle der Kapseln gemäß Beispiel 1 200 mg zerkleinertes mykorrhizahaltiges Perlit dosiert. Die Tomatenpflanzen wurden unter den gleichen Gewächshausbedingungen wie in Beispiel 1 kultiviert und nach 6 Wochen im Freiland ausgepflanzt.
Über einen Vegetations- und Erntezeitraum von 12 Wochen konnte bei den behandelten Pflanzen gemäß Beispiel 1 ein Mehrertrag von 15 % gegenüber der Kontrollprobe gemäß Vergleichsbeispiel 1 erzielt werden.
Die Erntemengen der Tomatenpflanzen sind in der nachfolgenden Tabelle 1 angegeben.

**Tabelle 1:**

| Ertrag von 10 Tomatenpflanzen | | |
|---|---|---|
| Erntewoche | Tomatengewicht Vergleichsbeispiel 1 | Tomatengewicht Beispiel 1 |
| 1.-4. | 2760 g | 2880 g |
| 5.-8. | 2320 g | 3100 g |
| Gesamtmenge | 5080 g | 5980 g |

### Beispiel 2

Sämlinge von Andenbeeren (Physalis peruviana) wurden in einem 12-er Topf pikiert. In jeden Topf wurde ein ca. 4 cm hoher Sämling eingepflanzt, dem eine Kapsel vom Typ B, gefüllt mit 200 mg mykorrhiziertem Perlit, zugesetzt wurde. Die Sämlinge wurden unter Gewächshausbedingungen (14 h, Beleuchtung, Luftfeuchtigkeit 65 - 70 %, Temperatur 23 ± 2 °C) kultiviert. Nach 6 Wochen wurde die Wuchshöhe der Andenbeeren gemessen.
Die erzielten Ergebnisse sind in der nachfolgenden Tabelle 2 angegeben.

### Vergleichsbeispiel 2 (V2a und V2b)

Sämlinge von Andenbeeren (Physalis peruviana) wurden in einen 12-er Topf pikiert. Je Topf wurden die Sämlinge ohne Zugabe einer Wirksubstanz kultiviert (Vergleichsbeispiel V2a) und unter einer einmaligen Zugabe von 200 mg mykorrhiziertem Perlit kultiviert (Vergleichsbeispiel V2b), jeweils unter den gleichen Bedingungen wie im Beispiel 1.
Nach 6 Wochen wurden die Wuchshöhen der Pflanzen gemessen.
Die erzielten Ergebnisse sind in der nachfolgenden Tabelle 2 angegeben.

**Tabelle 2:**

| Wuchshöhe (in cm) bei Andenbeeren (Physalis peruviana) nach Inokulierung | | | |
|---|---|---|---|
| Topf Nr. 1 - 20 | ohne Wirksubstanz V2a | mykorrhiz. Perlit V2b | Kapseln B mit mykorrhiz. Perlit Beispiel 2 |
| 1 | 50 | 64 | 48 |
| Durchschnittshöhe | 61,65 | 71,05 | 79,35 |
| durchschnittl. Gesamthöhe in % | 100 | 115,25 | 128,72 |

Die Versuchsergebnisse belegen, dass unter gleichen Kultivierungsbedingungen die mit Gelatinekapseln inokulierten Jungpflanzen ein deutlich besseres Wachstum aufweisen.
Die mit mykorrhizahaltigen Gelatinekapseln B behandelten Pflanzen (Beispiel 2) zeigten ein um 28 % verbessertes Höhenwachstum im Vergleich zu den Pflanzen (V2a), die ohne Zugabe einer Wirksubstanz kultiviert wurden. Auch im Vergleich zu einer Behandlung der Pflanzen durch lose Zugabe der gleichen Menge an mykorrhiziertem Perlit (V2b) kommt es bei einer Dosierung der Wirksubstanz in einer Gelatine-Kapsel zu einer deutlichen Verbesserung des Wachstums.

### Beispiel 3

In Kapseln vom Typ E wurden jeweils ein Linsensamenkorn und 200 mg eines wasserspeichernden Gel (Floraquatgel (kationenaktives Polydimethylpyrrolidiniumchlorid)) gefüllt. 20 dieser Kapseln wurden in Aussaaterde appliziert und angegossen. Die Samen in den Kapseln zeigten nach einer Kultivierungsdauer von 10 Tagen ein gleichmäßigeres Keimen. 95 % aller Samen zeigten Sämlinge (außerhalb der Erde) nach 10 Tagen.

### Vergleichsbeispiel 3

Die gleiche Menge an Linsensamen wie in Beispiel 3 wurde in Aussaaterde ausgesät, ohne Zugabe von wasserspeicherndem Gel. Bei den Kontrollpflanzen waren nach 10 Tagen lediglich 75 % aller Sämlinge zu sehen.
Die Dosierung des wasserspeichernden Gels zusammen mit dem Samen in einer Kapsel schafft wesentlich bessere Wachstumsbedingungen. Die Samenkörner werden gleichmäßig mit Wasser versorgt und eine Verzögerung des Keimungsvorganges wird so vermieden.

### Beispiel 4

Samen von Petunien wurden in handelsüblichem Aussaatsubstrat ausgesät. Die Sämlinge wurden nach Erreichen einer Wuchshöhe von ca. 2 bis 3 cm wie folgt umgepflanzt. Je ein Sämling wurde in einem 6-Topf mit handelsüblicher Topferde pikiert und jeweils einer Kapsel vom Typ C, die mit 130 mg mykorrhiziertem Perlit gefüllt ist, inokuliert. Nach 21 Tagen wurden die Pflanzen in ihrem Gesamthabitus beurteilt.

### Vergleichsbeispiel 4

Aus Samen von Petunien wurden unter den gleichen Bedingungen wie in Beispiel 3 Pflanzen gezogen, lediglich mit dem Unterschied, dass die Dosierung von mykorrhiziertem Perlit nicht in Kapseln sondern in loser Form erfolgte.

Die Pflanzen, die mit den Kapseln inokuliert wurden, zeigten einen vitaleren Gesamteindruck und wiesen etwa die doppelte Menge an Grünmasse auf (Sproß, Blätter, Seitentriebe). Dieser Versuch zeigt, dass durch die Inokulierung der Pflanze mit einer mit mykorrhiziertem Perlit gefüllten Gelatinekapsel ein beschleunigtes Wachstum der Pflanzen erzielt wird. Wachstumshemmungen, die durch das Umpflanzen im Normalfall eintreten, konnten nicht beobachtet werden.

### Beispiel 5

Bei der Anzucht von Tagetes-Hybriden wurden die Sämlinge mit je einer Kapsel vom Typ C, die mit 130 mg mykorrhiziertem Perlit gefüllt ist, inokuliert. Es konnte der gleiche Effekt wie bei den Pflanzen gemäß Beispiel 4 beobachtet werden. Normalerweise stagniert das Wachstum von Tagetessämlingen nach dem Pikieren für einige Tage und manchmal sogar für 1 bis 2 Wochen. Die mit den mykorrhizahaltigen Kapseln behandelten Sämlingen zeigten solche Wuchshemmungen nicht. Dies hatte zur Folge, dass die Tagetespflanzen 14 Tage eher blühten.

### Beispiel 6

Eisenmangel ist eine häufige Ursache für Chlorosen an Kulturpflanzen. Zur Vermeidung solcher Chlorosen muss regelmäßig ein Eisendünger angewandt werden.

Meist wird das Eisen jedoch von der Bodenmatrix schnell gebunden und steht den Pflanzen nicht mehr zur Verfügung. Sich langsam zersetzenden Wirksubstanzen liefern eine gleichmäßige Bereitstellung von z.B. Eisenverbindungen.
Eisenglukonat wird in eine Polyvinylalkohollösung suspendiert und so gleichmäßig verteilt. Diese Suspension wird getrocknet und anschließend vermahlen. Man erhält so eine Eisenverbindung mit retardierender Wirkung.
Dieses Polyvinylalkohol-Eisenglukonat wird mit Eisenglukonat z.B. 1:10 (180 mg Gemisch + 20 mg Eisenglukonat) vermischt und in eine Kapsel vom Typ D eingefüllt. Zitrusjungpflanzen (Höhe 10 cm) wurden in 12-er Töpfe mit handelsüblicher Topferde gepflanzt. In jeden Topf wurden zwei Kapseln mit der oben genannten Mischung gesteckt.

### Vergleichsbeispiel 6

Zitrusjungpflanzen (Höhe 10 cm) wurden in 12-er Töpfe mit handelsüblicher Topferde gepflanzt. Jeder Topf wurde mit einer Lösung aus 40 mg Eisenglukonat in 100 ml Wasser angegossen.

In dem Vergleichsversuch zeigten die Pflanzen nach 3 Monaten erste chlorotische Erscheinungen. Dies war bei den mit den Kapseln inokulierten Pflanzen auch nach 6 Monaten noch nicht zu beobachten.

## Patentansprüche

1. Dosiersystem für das Wachstum von Pflanzen und/oder Saatgut beeinflussende Substanzen, bestehend aus mindestens einem aus zwei zusammensteckbaren Teilstücken gebildeten kapselartigen Körper mit einem geschlossenen Hohlraum, der mit einer definierten Menge das Wachstum beeinflussender Substanzen gefüllt ist, wobei der kapselartige Körper aus einem im Erdreich mit zeitlicher Verzögerung selbsttätig zerstör- oder zersetzbarem Material besteht.

2. Dosiersystem nach Anspruch 1, **dadurch gekennzeichnet, dass** der kapselartige Körper aus einem nach einer definierten Verzögerungszeit selbsttätig aufplatzendem polymeren Material besteht.

3. Dosiersystem nach Anspruch 1, **dadurch gekennzeichnet, dass** der kapselartige Körper aus einem nach einer definierten Verzögerungszeit sich öffnenden wasserlöslichen Material besteht.

4. Dosiersystem nach Anspruch 3, **dadurch gekennzeichnet, dass** das wasserlösliche Material aus der Gruppe der Proteine/Peptide, Polysaccharide, Polyvinylalkohole, Acrylatderivate oder Cellulosederivate besteht.

5. Dosiersystem nach Anspruch 4, **dadurch gekennzeichnet, dass** der kapselartige Körper aus unterschiedlich harter Gelatine auf der Basis eines Bindegewebsproteins mit einem Bloombereich von 80 bis 300 und einem pH-Wert von 5 bis 7 besteht.

6. Dosiersystem nach einem der Ansprüche 1 bis 5, **dadurch gekennzeichnet, dass** der kapselartige Körper aus mehreren Schichten unterschiedlicher Materialien besteht, wobei die äußere Schicht aus einem quellbaren Material besteht.

7. Dosiersystem nach Anspruch 6, **dadurch gekennzeichnet, dass** das quellbare Material zusätzlich mit einem oder mehreren der Wirkstoffe Zucker, Kohlenhydrate, Bakterien, Pilze oder Nährstoffen versetzt ist.

8. Dosiersystem nach einem der Ansprüche 1 bis 7, **dadurch gekennzeichnet, dass** die das Wachstum beeinflussenden Stoffe Blüh- und Wachstumsstimulatoren, Pflanzennährstoffe, Infektionseinheiten verschiedener Mykorrhizaarten, Phytohormone, Bakterien, Pilze, Rhizobien, Algenpräparate, Pflanzenextrakte, Spurenelemente oder wasserspeichernde Stoffe sind.

9. Dosiersystem nach einem der Ansprüche 1 bis 8, **dadurch gekennzeichnet, dass** der kapselartige Körper zusätzlich mit anorganischen und/oder organischen Füllund Hilfsstoffen gefüllt ist.

10. Dosiersystem nach einem der Ansprüche 1 bis 9, **dadurch gekennzeichnet, dass** in dem kapselartigen Körper eine oder mehrere Substanzen in retardierter Form vorliegen.

11. Dosiersystem nach einem der Ansprüche 1 bis 10, **dadurch gekennzeichnet, dass** die Verzögerungszeit zur Freisetzung der das Wachstum beeinflussenden Substanzen über die Wanddicke der Kapsel einstellbar ist.

12. Dosiersystem nach einem der Ansprüche 1 bis 11, **dadurch gekennzeichnet, dass** sich in dem kapselartigen Körper mindestens ein Saatkorn befindet.

13. Dosiersystem nach Anspruch 12, **dadurch gekennzeichnet, dass** sich in dem kapselartigen Körper ein Wachstumsstimulator für das Saatkorn und die erforderlichen Pflanzennährstoffe befinden.

14. Dosiersystem nach einem der Ansprüche 1 bis 13, **dadurch gekennzeichnet, dass** der kapselartige Körper aus einer ersten Kapsel besteht, in die mindestens eine das Wachstum beeinflussende Substanz und eine zweite, kleinere Kapsel, die mindestens eine das Wachstum beeinflussende Substanz enthält, gefüllt sind.

15. Dosiersystem nach Anspruch 14, **dadurch gekennzeichnet, dass** die Verzögerungszeit für die Zersetzung der zweiten Kapsel länger ist als die der ersten Kapsel.

16. Dosiersystem nach einem der Ansprüche 14 bis 15, **dadurch gekennzeichnet, dass** mindestens eine der Kapseln ein Saatgut enthält.

17. Dosiersystem nach einem der Ansprüche 1 bis 16, **dadurch gekennzeichnet, dass** dieses aus einem Paar kapselartiger Körper besteht, wobei einer der kapselartigen Körper mit einer Substanz gefüllt ist, die mit der in dem anderen kapselartigen Körper befindlichen Substanz unverträglich ist.

18. Dosiersystem nach einem der Ansprüche 1 bis 17, **dadurch gekennzeichnet, dass** der kapselartige Körper mit Nährstoffen für die Pflanze oder das Saatkorn, Mykorrhizamyzel und antibiotisch wirksamen Substanzen zur Vermeidung des Befalls von Pflanze oder Saatkorn mit schädlichen Organismen gefüllt ist.
